# EUROPÄISCHE PATENTANMELDUNG

(11) **EP 4 056 426 A1**
(43) Veröffentlichungstag der Anmeldung: **14.09.2022**
(21) Anmeldenummer: 22161487.8
(22) Anmeldetag: 10.03.2022
(51) Int. Cl.: B60R 9/04

(54) **DACHREHLING**

(30) Priorität: 10.03.2021 DE 102021105871
(71) Anmelder: Dura Automotive Systems GmbH, 58507 Lüdenscheid (DE)
(72) Erfinder: Schulze zur Wiesche, Jochen, 51143 Köln (DE)
(74) Vertreter: btb IP Bungartz Baltzer Partnerschaft mbB Patentanwälte

(57) **Zusammenfassung**

Die Erfindung betrifft eine von oben auf die Karosserie eines Kraftfahrzeugs montierbare Dachreling.

Es besteht das ständige Bedürfnis, die Konstruktion von Dachrelings zu verbessern.

Erfindungsgemäß umfasst die Dachreling zur Montage an Montageöffnungen der Karosserie eines Kraftfahrzeugs von außerhalb des Kraftfahrzeugs, ein oberes Dachrelingprofil und ein Trägerelement, wobei das Trägerelement bei bestimmungsgemäßer Montage der Dachreling über die Montageöffnungen mit der Karosserie verschraubt ist, wobei das obere Dachrelingprofil eingerichtet ist, über eine Rastverbindungen auf das untere Trägerelement aufgesetzt und mit dem Trägerelement rastend verbunden zu werden, wobei die Rastverbindung durch mehrere mit dem Trägerelement oder dem oberen Dachrelingprofil verbundene Rastclips und für die Rastverbindung zu den Rastclips korrespondierenden Aufnahmen im oberen Dachrelingprofil oder Trägerelement gebildet ist.

## Beschreibung

Die Erfindung betrifft eine von oben auf die Karosserie eines Kraftfahrzeugs montierbare Dachreling.

Es ist bekannt die Dachreling eines Kraftfahrzeugs von unten, das heißt aus dem Innenraum des Fahrzeugs mit Schrauben und Muttern an der Karosserie des Fahrzeugs zu befestigen. Allerdings gibt es Montagewerke, die eine solche Montage insbesondere aus ergonomischen Gründen nicht erlauben und eine Montage der Dachreling von oben nach unten von außerhalb des Fahrzeugs erfordern.

Entsprechend wird in solchen Fällen die Dachreling von oben verschraubt. Hierfür müssen Zugangsöffnungen in der Oberfläche der Dachreling vorgesehen werden. Diese müssen anschließend durch Klappen oder Abdeckungen verdeckt werden, was den optischen Eindruck beeinträchtigen kann. Insbesondere die farbliche Abstimmung zwischen eloxierten Profilen und lackierten Kunststoffabdeckungen ist eine Herausforderung und häufig nicht möglich.

Der Erfindung liegt die Aufgabe zu Grunde, die oben genannten Nachteile zu überwinden.

Die Lösung der Aufgabe erfolgt erfindungsgemäß durch eine Dachreling mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist die Dachreling mehrteilig ausgebildet und umfasst ein oberes Dachrelingprofil und ein Trägerelement, wobei das Trägerelement bei bestimmungsgemäßer Montage der Dachreling über die Montageöffnungen mit der Karosserie verschraubt ist, wobei das obere Dachrelingprofil eingerichtet ist, über eine Rastverbindungen auf das Trägerelement aufgesetzt und mit dem Trägerelement rastend verbunden zu werden. Die Rastverbindung ist dabei durch mehrere mit dem Trägerelement oder dem oberen Dachrelingprofil verbundene Rastclips und für die Rastverbindung zu den Rastclips korrespondierenden Aufnahmen im oberen Dachrelingprofil oder Trägerelement gebildet.

Bevorzugt bildet die bei bestimmungsgemäßer Montage am Fahrzeug die äußere Sichtfläche bildende Oberfläche des oberen Dachrelingprofils eine durchgängige Fläche ohne in die Sichtfläche eingebrachte Aussparungen und/oder Trennfugen.

Durch die erfindungsgemäße Lösung wird ermöglicht, die Dachreling an der Karosserie des Kraftfahrzeugs von außerhalb des Kraftfahrzeugs zu montieren. Es müssen für die Montage des oberen Dachrelingprofils am Trägerelement keine Aussparungen oder Öffnungen vorgesehen werden.

Das Trägerelement kann dabei aus mehreren einzelnen Elementen gebildet sein. Bevorzugt ist das Trägerelement aber ein durchgängiges Trägerprofil oder eine durchgängige Trägerplatte.

Das Trägerelement kann beispielsweise ein Strangpressprofil sein, ist aber bevorzugt ein Stanzteil aus Aluminium oder Stahl.

Das Trägerelement kann mehrere Unterteile wie Fixierstifte, Stifte zur Lastübertragung, Abstandshalter zur Überbrückung von Abständen, dämpfende Elemente wie Schaumstoffklebebänder zur Vermeidung von Klappergeräuschen und/oder starr befestigte Rastclips, vorsehen.

Das Verschrauben des Trägerelements an der Karosserie durch die Montageöffnungen erfolgt bevorzugt über beidseitig bedienbare Schrauben. Die Schrauben weisen an beiden Schraubenenden eine Werkzeugaufnahmemöglichkeit auf. So kann für die Montage das Trägerelement von außerhalb des Fahrzeugs bzw. von oben erfolgen und bei einer eventuell notwendigen Demontage kann die Dachreling als Ganzes einschließlich montiertem oberen Dachrelingprofil abgeschraubt werden.

Zur Abdichtung der Dachreling weist diese vorzugsweise ein Dichtungsprofil bzw. Dichtungssegment auf, das eingerichtet ist, die Dachreling bei bestimmungsgemäßer Montage am Fahrzeug nach außen abzudichten, wobei das Trägerprofil und das Dichtungsprofil bevorzugt als Baugruppe miteinander verbindbar ausgebildet sind.

Das Dichtungssegment kann aus mehreren Teilen bestehen, z. B. aus extrudierten Dichtlippen und spritzgegossenen Dichtungssegmenten (Endkappen). Das Dichtungssegment und das Trägerelement können vormontiert als Baugruppe ausgestaltet sein.

Zur Vereinfachung der Montage von oberem Dachrelingprofil und Trägerelement sind Positionierstifte vorgesehen, die entweder im Trägerelement oder dem oberen Dachrelingprofil vorgesehen sind. Das obere Dachrelingprofil und/oder die Trägerplatte weisen zu den Positionierstiften korrespondierende Aufnahmen auf, wobei die Positionierstifte bei bestimmungsgemäßer Montage in die korrespondierenden Aufnahmen des oberen Dachrelingprofils einführbar sind.

Dies erleichtert einerseits die Montage. Ferner können diese auch Querkräfte (quer zur Verbindungsstelle wirkende Kräfte) aufnehmen. Die Positionierstifte sind bevorzugt entsprechend ausgebildet. Die Positionierstifte sind bevorzugt für die Aufnahme höherer Kräfte aus Metall gefertigt.

In einer vorteilhaften Ausgestaltung weisen die Rastclips Rastnasen bzw. Halteschenkel und Federelemente auf, wobei die Federelemente bei bestimmungsgemäßer Montage der Rastclips die Rastnasen in der Montageposition klemmend halten, wobei die Rastclips eine Öffnung zum Lösen der Rastverbindung der Rastclips aufweisen und die Öffnung bei bestimmungsgemäßer Montage der Dachreling auf einer dem oberen Dachrelingprofil abgewandten Seite angeordnet sind.

Bevorzugt haben die Rastclips eine Ausgestaltung wie in der Offenlegungsschrift DE102011010141A1 beschrieben, insbesondere in Bezug auf die Rastnasen, die rückfedernden Mittel, Material und die Rastlöseausgestaltung.

Die Rastclips sind bevorzugt mit dem Trägerelement vernietet. Die Rastclips können aber auch starr an dem oberen Dachrelingprofil statt an dem Trägerelement montiert sein.

Ferner können die Rastclips auch an der Unterseite der Trägerplatte durch Durchgangslöcher statt an der Oberseite montiert werden, um zusätzlichen Bauraum im oberen Dachrelingprofil zu erhalten.

Um die Rastverbindung zu stabilisieren können zwischen oberem Dachrelingprofil und Trägerplatte rückfedernde Mittel vorgesehen sein. Die rückfedernden Mittel können insbesondere durch Schaumstoffstreifen gebildet sein, die auf das obere Dachrelingprofil und/oder die Trägerplatte geklebt werden.

Das obere Dachrelingprofil im Sinne der Erfindung ist insbesondere ein kraftaufnehmendes bzw. tragendes Bauteil, an dem ein Dachträger montiert werden kann und das belastbar ist. Insbesondere ist das obere Dachrelingprofil als Aluminiumstrangpressprofil ausgebildet ist und kann eine eloxierte Oberfläche aufweisen.

Weitere Ausgestaltungen können vorsehen, dass die Dachreling im Dachgraben des Fahrzeugs montiert ist. Auch kann die Dachreling an der Karosserieseite eines Fahrzeugs montiert sein.

Die Dachreling kann auch als Stützendachreling ausgebildet sein.

Bevorzugt sind zwischen der Karosserie und der Trägerplatte Abstandshalter vorgesehen. Diese können metallisch sein und können beispielsweise mit der Trägerplatte verschweißt sein.

Auch können die Abstandshalter aus Kunststoff, kunststoffverstärkt oder als Kunststoff-Metall-Hybrid-Abstandshalter ausgebildet sein, die beispielsweise in die Trägerplatte eingeklipst werden.

Ein weiterer Aspekt der Erfindung ist ein Kraftfahrzeug mit einer Dachreling mit einem oder mehreren der zuvor beschriebenen Merkmale.

Die Erfindung beschränkt sich nicht auf eine Dachreling. Grundsätzlich können auch andere kraftaufnehmende Profile in dieser Art befestigt werden. Diese sind ebenfalls mit den zuvor genannten Merkmalen von der Anmeldung umfasst.

Die Dachreling wird wie nachfolgend skizziert montiert.
- Bereitstellen von Trägerelement und Dichtungssegment /Dichtungen, bevorzugt als Baugruppe.
- Aufsetzen von Trägerelement und Dichtungssegment bzw. der Baugruppe auf das Dach und Verschrauben mit der Karosserie.
- Positionieren von oberem Dachrelingprofil und Trägerplatte über Positionierungsstift.
- Einklipsen des oberen Dachrelingprofils auf der Trägerplatte über die Rastclipse.

### Ablauf der Demontage für den Service / Wartung:

Von der Innenseite des Fahrzeugs - bei (teilweise) demontiertem Dachhimmel - hat der Bediener Zugriff auf die Befestigungsschrauben des Trägerelements. Die Befestigungsschrauben haben an beiden Enden Werkzeugaufnahmen, bevorzugt als Steckschlüsseleinsätze. An der Karossiere des Fahrzeugs sind Muttern angeschweißt, über die das Trägerelement an der Karosserie verschraubt ist. Der Bediener kann alle Schrauben durch die Schweißmuttern lösen. Die gesamte Dachreling-Baugruppe (inkl. Schrauben) kann nun von der Oberseite des Fahrzeugs entfernt werden. Um das Trägerelement vom oberen Dachrelingprofil zu trennen, können die Rastnasen bzw. Halteschenkel der Rastclips mit einem Werkzeug durch Aussparungen in dem Trägerelement erreicht werden.

In den Zeichnungen zeigt:
- Abb. 1:: Teil der Karosserie mit montierter Dachreling.
- Abb. 2:: Die drei Hauptsegmente der Dachreling-Montage.
- Abb. 3:: Schnitt durch die Dachreling-Montage an der Befestigungsschraube.
- Abb. 4:: Schnitte durch einen Rastclip beim ersten Einrasten des oberen Dachrelingprofils während der Montage und in der verriegelten Endposition.
- Abb. 5:: Schnitt durch den Positionier- bzw. Fixierstift. Der Stift ermöglicht die Übertragung von Kräften in Quer- und Längsrichtung.
- Abb. 6:: Schnitt durch den Positionier- bzw. Fixierstift in montierter Position (oberes Dachrelingprofil noch nicht montiert).
- Abb. 7:: Detailansichten von Abstandhalter und Trägerelement bzw. -platte (links von oben/ rechts von unten).
- Abb. 8:: Längsschnitt durch die Schnittstelle zwischen Abstandshalter und Dichtung.
- Abb. 9:: Detailansichten des fest auf der Trägerplatte montierten Rastclips (links von oben/ rechts von unten).
- Abb. 10:: Schraube mit Innensechskant an beiden Enden.
- Abb. 11:: Ansicht vom Fahrzeuginnenraum bei demontiertem Dachhimmel. Zugang zum Lösen der Schrauben.
- Abb. 12:: Ansicht der Demontage der Dachreling-Baugruppe von der Fahrzeugoberseite für Servicearbeiten.
- Abb. 13:: Schnittdarstellung des Trennvorgangs vom oberen Dachrelingprofil und Trägerelement. Werkzeugzugang zu den Halteschenkel bzw. Rastnasen des Rastclips.
- Abb. 14:: Profil mit geschlossener Kammer. Löcher müssen gefräst oder ausgeklinkt werden.
- Abb. 15:: Ansichten des alternativen offenen Profils. Keine Notwendigkeit für das Fräsen von Löchern an der Schnittstelle des Rastclips.
- Abb. 16:: Ansichten des Montageprozesses der Verschlussplatte inklusive Dichtungssegment am Fahrzeug.

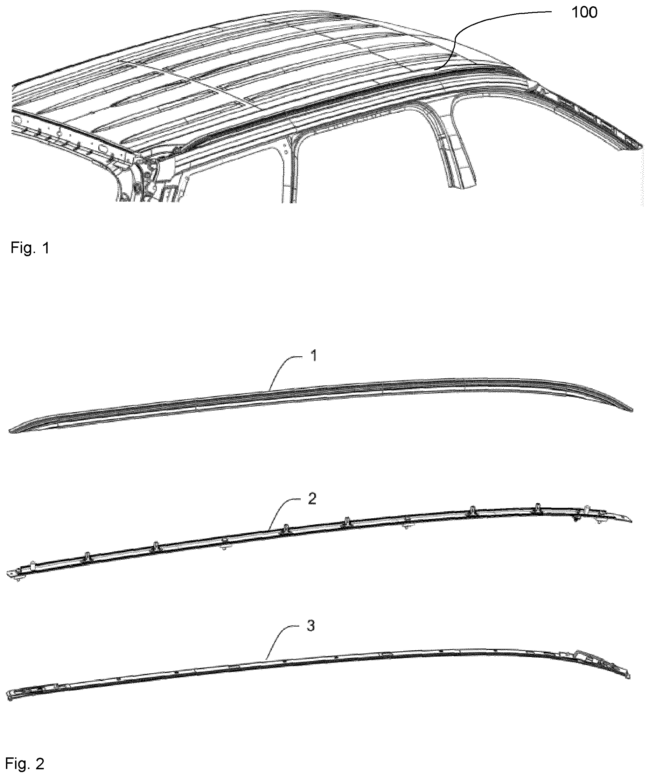

In Figur 1 ist die Montage der erfindungsgemäßen Dachreling 100 auf der Karosserie gezeigt. Die Dachreling 100 ist mehrteilig ausgestaltet. Die drei Hauptelemente, das obere Dachrelingprofil 1 (Oberschale), das als Trägerplatte 2 ausgebildete Trägerelement und das Dichtungssegment 3 sind in Figur 2 übereinander dargestellt.

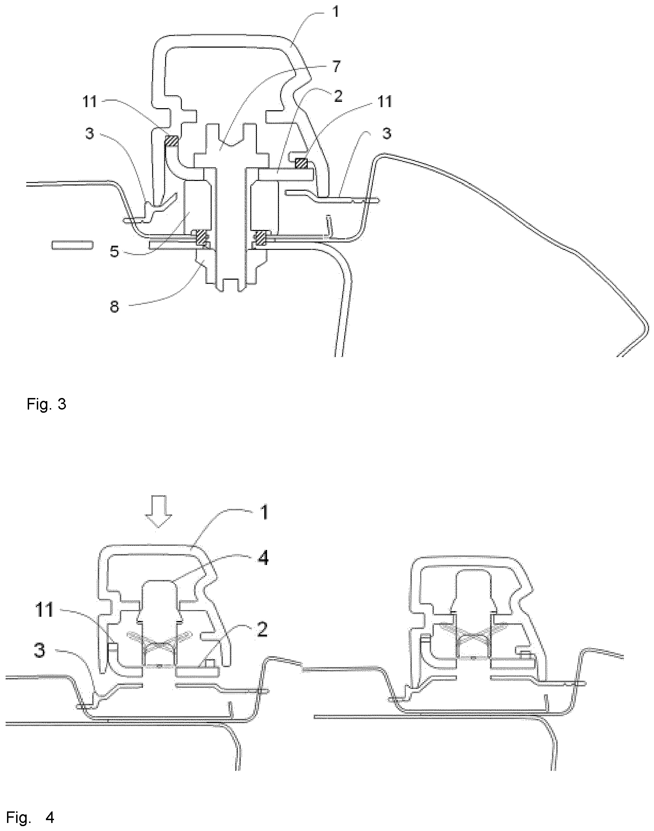

Die Trägerplatte 2 wird mit der Karosserie verschraubt. Die Figur 3 zeigt einen Schnitt durch die Dachreling bei bestimmungsgemäßer Montage an der Befestigungsschraube 7.

Zu erkennen ist ein Dachausschnitt der Fahrzeugkarosserie, an den eine Mutter 8 angeschweißt ist. Das Trägerelement ist als Trägerplatte 2 ausgebildet. Zwischen Trägerplatte 2 und Karosserie ist ein Abstandshalter 5 vorgesehen. Zur Reduzierung von möglichen Klappergeräuschen ist zudem ein Schaumstoffpolster an dem Abstandshalter 5 angeordnet. Ferner ist zwischen Trägerplatte 2 und Karosserie das Dichtungselement 3 vorgesehen, welches die Dachreling von der Verbindungsstelle nach außen abdichtet.

Die Trägerplatte 2 und die Karosserie sind über die beidseitig bedienbare Schraube 7 miteinander verschraubt. Auf der Trägerplatte 2 ist das obere Dachrelingprofil 1 aufgesetzt. Zwischen dem oberen Dachrelingprofil 1 und der Trägerplatte 2 sind als rückstellende Mittel Schaumstoffklebebänder 11 vorgesehen.

Die Figur 4 zeigt einen Schnitt durch die Dachreling 100 an der Stelle von einem der Rastclips (Verbindungsclip 4), der die Rastverbindung zwischen oberem Dachrelingprofil 1 und Trägerplatte 2 realisiert, links in der noch nicht eingerasteten Stellung und rechts in der eingerasteten Stellung. Die Rastnasen und die Federelemente sind deutlich erkennbar.

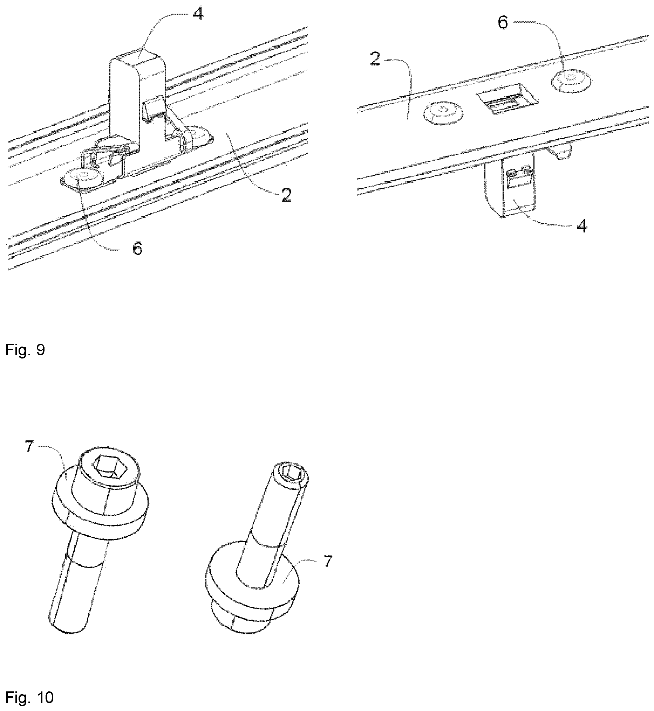

Der Verbindungsclip 4 ist mit der Trägerplatte 2 vernietet (s. Figur 9).

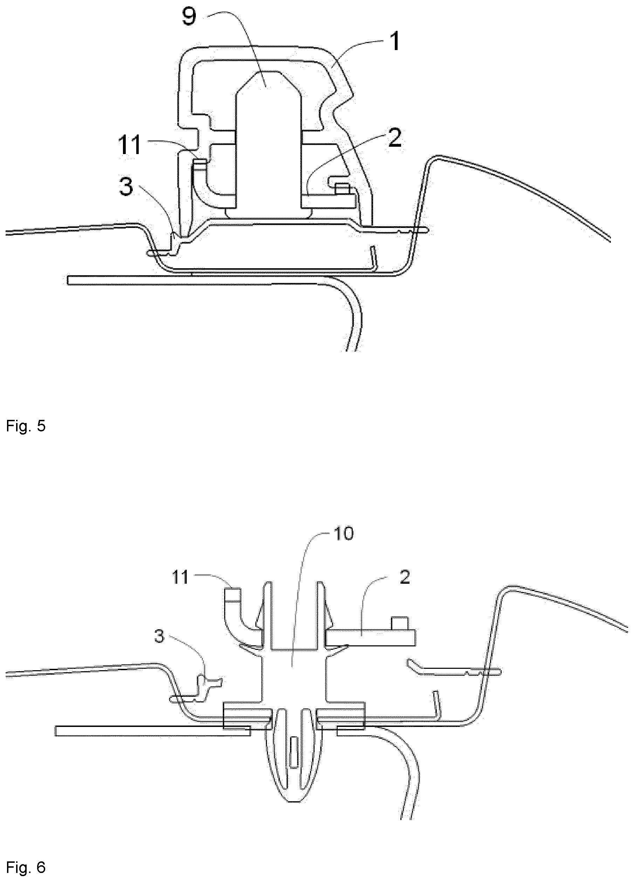

Die Figur 5 zeigt den als Fixier- und Lastübertragungsstift 9 ausgebildeten Positionierstift. Dieser ist vorzugsweise aus Metall. Über diesen ist sowohl eine Kraftübertragung in Läng- und in Querrichtung möglich. Dies führt zu einer verbesserten Stabilität von oberem Dachrelingprofil 1 und Trägerplatte 2.

Die Figur 6 zeigt einen Schnitt einen Positionierclip bzw. Fixierklammer 10. Diese kann als Positionierhilfe vorgesehen sein und/oder als Abstandshalter 5 dienen.

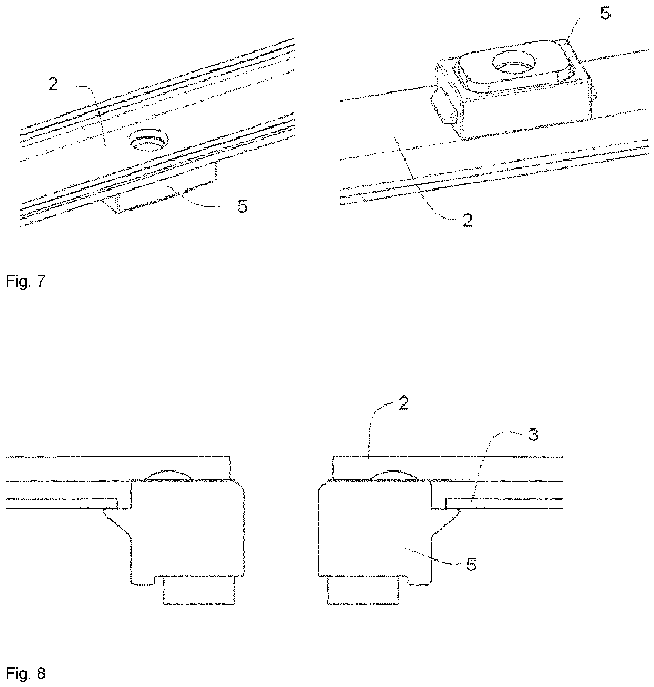

Die Figur 7 zeigt eine mögliche Ausgestaltung eines Abstandshalter 5. Dieser ist an der Trägerplatte 2 angeordnet (links Trägerplatte 2 von oben zu sehen, rechts von unten).

Der Abstandshalter 5 weist seitliche Haken auf. Ferner ist an dessen Unterseite ein Schaumstoffelement angeordnet.

In Figur 8 ist der Abstandshalter 5 nochmals dargestellt, wobei das Zusammenspiel von Haken und Dichtungssegment 3 gezeigt ist. Über die Haken wird das Dichtungssegment 3 verhakt.

Der Abstandshalter 5 kann auch mit dem Trägerelement 2 verschweißt werden. Hierfür ist beim Abstandshalter die konvexe Auswölbung vorgesehen, so dass der Abstandshalter 5 und das Trägerelement 2 druckverschweißt werden können.

Die Figur 9 zeigt die Rastclips bzw. Verbindungsclips 4, die über eine Nietverbindung 6 an dem Trägerelement 2 befestigt sind.

Auf der Unterseite (rechtes Bild) ist eine Öffnung in der Trägerplatte 2 zu erkennen. Durch diese ist der Rastclip 4 von unten zur Demontage zugänglich.

Die Figur 10 zeigt die beidseitig bedienbare Schraube 7 mit Kragen von zwei Seiten.

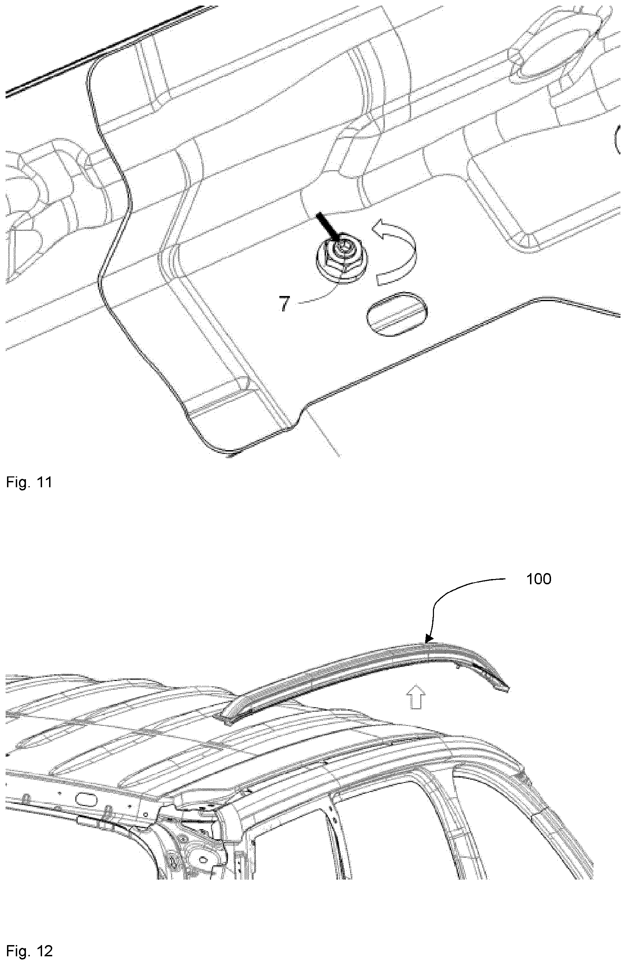

Die Figur 11 zeigt eine Ansicht im Fahrzeug in Richtung Dach. Angedeutet ist die Demontage der Schraube 7 im Servicefall.

Die nachfolgende Figur 12 zeigt die Demontage der Dachreling von der Karosserie. Demontiert wird die Baugruppe aus oberem Dachrelingprofil 1, Trägerelement 2 und Dichtungssegment 3.

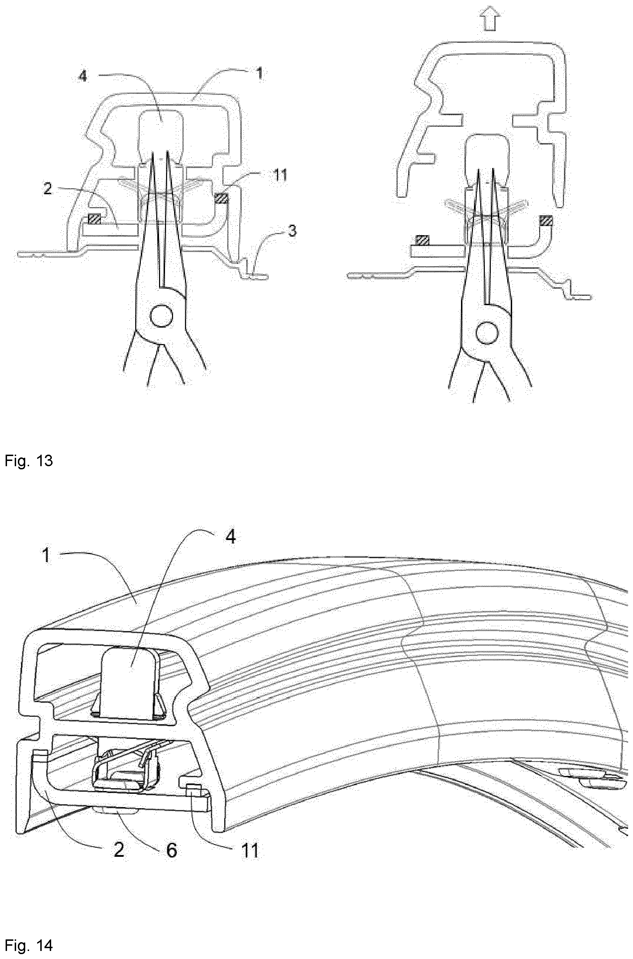

Im nächsten dargestellten Schritt in der Figur 13 wird das oberer Dachrelingprofil 1 von der Trägerplatte 2 gelöst. Hierfür greift ein zangenartiges Werkzeug durch die Öffnung in der Unterseite der Trägerplatte 2 und löst die Rastverbindung durch die Verbindungsclips 4.

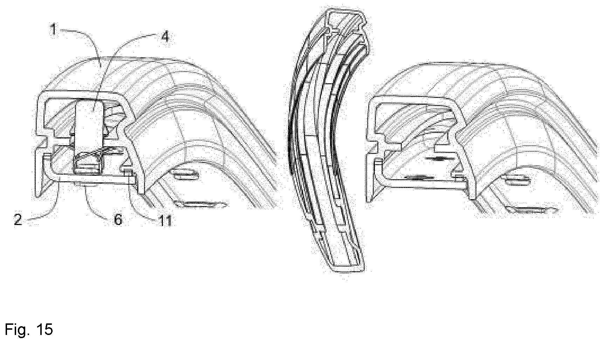

Die Figuren 14 und 15 zeigen zwei mögliche Ausgestaltungen des oberen Dachrelingprofils 1. In Figur 14 sind nur Aussparungen im Zwischensteg des oberen Dachrelingprofils 1 vorgesehen, in die der Verbindungsclip 4 einrastet.

In Figur 15 ist der Steg als offener Nut ausgestaltet und der Verbindungsclip 4 kann dort einrasten. Dies kann fertigungstechnischen Vorteile haben.

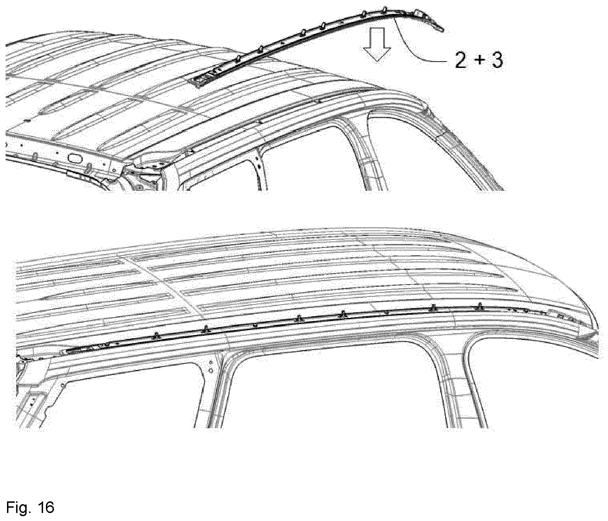

Die Figur 16 zeigt nochmals die Montage der Baugruppe aus Trägerelement und Dichtungssegment 3 auf der Karosserie.

### Bezugszeichenliste:

- 1: oberes Dachrelingprofil
- 2: Trägerplatte
- 3: Dichtungssegment (kann aus mehreren Komponenten bestehen)
- 4: Rastclip bzw. Verbindungsclip
- 5: Abstandshalter mit Schaumstoffpolster
- 6: Niet
- 7: Schraube
- 8: angeschweißte Mutter
- 9: Positionier- und Lastübertragungsstift (vorzugsweise Metall)
- 10: Fixierklammer (vorzugsweise Kunststoff mit Schaumstoffdonut)
- 11: Schaumstoff-Klebebänder

- 100: Dachreling

## Patentansprüche

1. Dachreling (100) zur Montage an Montageöffnungen der Karosserie eines Kraftfahrzeugs von außerhalb des Kraftfahrzeugs, umfassend ein oberes Dachrelingprofil (1) und ein unteres Trägerelement (2), wobei das Trägerelement (2) für die bestimmungsgemäßer Montage der Dachreling (100) an der Karosserie über die Montageöffnungen mit der Karosserie verschraubbar ist, wobei das obere Dachrelingprofil (1) eingerichtet ist, über eine Rastverbindung auf das Trägerelement (2) aufgesetzt und mit dem Trägerelement (2) rastend verbunden zu werden, wobei die Rastverbindung durch mehrere mit dem Trägerelement (2) oder dem oberen Dachrelingprofil (1) verbundene Rastclips (4) und für die Rastverbindung zu den Rastclips (4) korrespondierenden Aufnahmen im oberen Dachrelingprofil (1) oder Trägerelement (2) gebildet ist.

2. Dachreling (100) nach Anspruch 1, **dadurch gekennzeichnet, dass** das Trägerelement (2) ein durchgängiges Trägerprofil oder eine durchgängige Trägerplatte (2) ist.

3. Dachreling (100) nach einem der vorstehenden Ansprüche, **dadurch gekennzeichnet, dass** die bei bestimmungsgemäßer Montage am Fahrzeug die äußere Sichtfläche bildende Oberfläche des oberen Dachrelingprofils (1) eine durchgängige Fläche ohne in die Sichtfläche eingebrachte Aussparungen und/oder Trennfugen bildet.

4. Dachreling (100) nach einem der vorstehenden Ansprüche, **dadurch gekennzeichnet, dass** die Dachreling (100) ferner ein Dichtungssegment (3) aufweist, das eingerichtet ist, die Dachreling (100) bei bestimmungsgemäßer Montage am Fahrzeug nach außen abzudichten..

5. Dachreling (100) nach dem vorhergehenden Anspruch, **dadurch gekennzeichnet, dass** das Trägerelement (2) und das Dichtungssegment (3) eine Baugruppe bilden.

6. Dachreling (100) nach einem der vorstehenden Ansprüche, **dadurch gekennzeichnet, dass** in dem Trägerelement (2) und/oder oberen Dachrelingprofil (1) Positionierstifte (9) vorgesehen sind, und im oberen Dachrelingprofil (1) und/oder Trägerelement (2) korrespondierende Aufnahmen vorgesehen sind, wobei die Positionierstifte (9) bei bestimmungsgemäßer Montage in die korrespondierenden Aufnahmen einführbar sind.

7. Dachreling (100) nach einem der vorstehenden Ansprüche, **dadurch gekennzeichnet, dass** zwischen oberem Dachrelingprofil (1) und dem Trägerelement (2) rückfedernde Mittel vorgesehen sind, die eingerichtet sind, die Rastverbindung zu stabilisieren.

8. Dachreling (100) nach dem vorhergehenden Anspruch, **dadurch gekennzeichnet, dass** die rückfedernden Mittel durch Schaumstoffklebestreifen gebildet sind.

9. Dachreling (100) nach einem der vorstehenden Ansprüche, **dadurch gekennzeichnet, dass** die Schrauben (7) zum Verschrauben des Trägerelements an der Karosserie beidseitig, von beiden Schraubenenden, bedienbar ausgebildet sind.

10. Dachreling (100) nach einem der vorstehenden Ansprüche, **dadurch gekennzeichnet, dass** die Rastclips Rastnasen und bei bestimmungsgemäßer Montage der Rastnasen die Rastnasen in der Montageposition haltende Federelemente aufweisen, wobei die Rastclips auf einer dem oberen Dachrelingprofil abgewandten Seite eine Öffnung zur Demontage der Rastclips und/oder Lösen der Rastverbindung aufweisen.

11. Dachreling (100) nach einem der vorstehenden Ansprüche, **dadurch gekennzeichnet, dass** das obere Dachrelingprofil als Aluminiumstrangpressprofil ausgebildet ist und bevorzugt eine eloxierte Oberfläche aufweist.

12. Kraftfahrzeug mit einer Dachreling nach einem der vorherstehenden Ansprüche.

13. Kraftfahrzeug nach dem vorhergehenden Anspruch, wobei im Montagebereich der Dachreling Muttern (8) an die Karosserie angeschweißt sind und das Trägerelement (2) der Dachreling mit der Karosserie über die Muttern (8) verschraubt ist.

14. Verfahren zur Montage einer Dachreling (100) nach einem der vorhergehenden Ansprüche an einem Fahrzeug, aufweisend die Schritte
- Bereitstellen von Trägerelement (2) und Dichtungssegment (3), bevorzugt als Baugruppe;
- Aufsetzen von Trägerelement (2) und Dichtungssegment auf die Karossiere des Fahrzeugs und Verschrauben des Trägerelements (2) mit der Karosserie;
- Positionieren von oberem Dachrelingprofil (1) und Trägerelement (2);
- Einklipsen des oberen Dachrelingprofils (1) auf dem Trägerelement (2) über die Rastclipse (4).

15. Verfahren zur Demontage einer Dachreling (100) von einem Kraftfahrzeug nach Anspruch 13, aufweisend die folgenden Schritte
- Demontage eines Dachhimmel des Kraftfahrzeugs für den Zugriff auf die die Verschraubung von Trägerelement (2) und Karossiere;
- Lösen der Verschraubung aus dem Innenraum des Kraftfahrzeugs;
- Entfernen der Dachreling von der Oberseite des Fahrzeugs.
